# EUROPEAN PATENT APPLICATION

(11) **EP 2 642 550 A1**
(43) Date of publication of application: **25.09.2013**
(21) Application number: 11852812.4
(22) Date of filing: 22.11.2011
(51) Int. Cl.: H01M 2/04, H01M 2/18

(54) **TOP CAP FOR A CYLINDRICAL SECONDARY BATTERY, AND SECONDARY BATTERY INCLUDING SAME**

(30) Priority: 28.12.2010 KR 20100137020
(71) Applicant: LG Chem, Ltd., Youngdungpo-gu Seoul 150-721 (KR)
(72) Inventor: LEE, Jung Ah, Seoul 157-200 (KR); KIM, Do Gyun, Cheongwon-gun Chungcheongbuk-do 363-884 (KR); HWANGBO, Kwang Su, Cheongwon-gun Chungcheongbuk-do 363-883 (KR); JUNG, Sang Sok, Cheongwon-gun Chungcheongbuk-do 363-884 (KR); KIM, Dong-Myung, Daejeon 305-759 (KR); NAM, Sang Bong, Cheonan-si Chungcheongnam-do 330-913 (KR)
(74) Representative: Cabinet Plasseraud
(86) International application number: PCT/KR2011/008923
(87) International publication number: WO 2012/091291

(57) **Abstract**

Disclosed is a top cap for cylindrical secondary batteries that is composed of a corrosion-resistant single substance and has a surface with irregularities to impart surface roughness capable of preventing formation of surface scratches, and a secondary battery including the same.

## Description

### [TECHNICAL FIELD]

The present invention relates to a top cap for cylindrical secondary batteries that is composed of a corrosion-resistant single substance and has a surface with irregularities to impart surface roughness capable of preventing formation of surface scratches and a secondary battery comprising the same.

### [BACKGROUND ART]

The development of techniques associated with mobile devices and increase in demand therefor have brought about rapid increase in the demand for secondary batteries as energy sources. Among secondary batteries, lithium secondary batteries with a high energy density and a discharge voltage are actively studied, and commercialized and widely used.

A secondary battery has a structure in which an electrode assembly including a cathode, an anode and a separator interposed therebetween and containing an electrolyte impregnated therein is sealed in a case. The electrode assembly is divided into a jelly-roll type in which a cathode and an anode formed by applying an electrode active material to both surfaces of a long sheet-form current collector foil are rolled such that a separator is interposed between the cathode and the anode, and a stack-type in which a plurality of cathodes and a plurality of anodes formed by applying an electrode active material to both surfaces of a current collector foil with a predetermined unit size are laminated in this order such that a separator is interposed between the cathode and the anode.

Depending on the type of the electrode assembly to be mounted in a battery case, the secondary battery may be divided into a cylindrical battery mounted in a cylindrical metal can, a rectangular battery mounted in a rectangular metal can and a pouch-shaped battery mounted in a pouch-shaped case made of an aluminum laminate sheet. Of these, the cylindrical battery has advantages of relatively high capacity and structural stability

Generally, a cylindrical secondary battery is manufactured by welding an anode of the electrode assembly to the bottom of a cylindrical metal can in a state in which a jelly-roll electrode assembly is mounted in the can, and welding a protruding terminal of the top cap coupled to the top thereof to the cathode of the electrode assembly in order to seal the battery in a state that the electrode assembly and an electrolyte are incorporated.

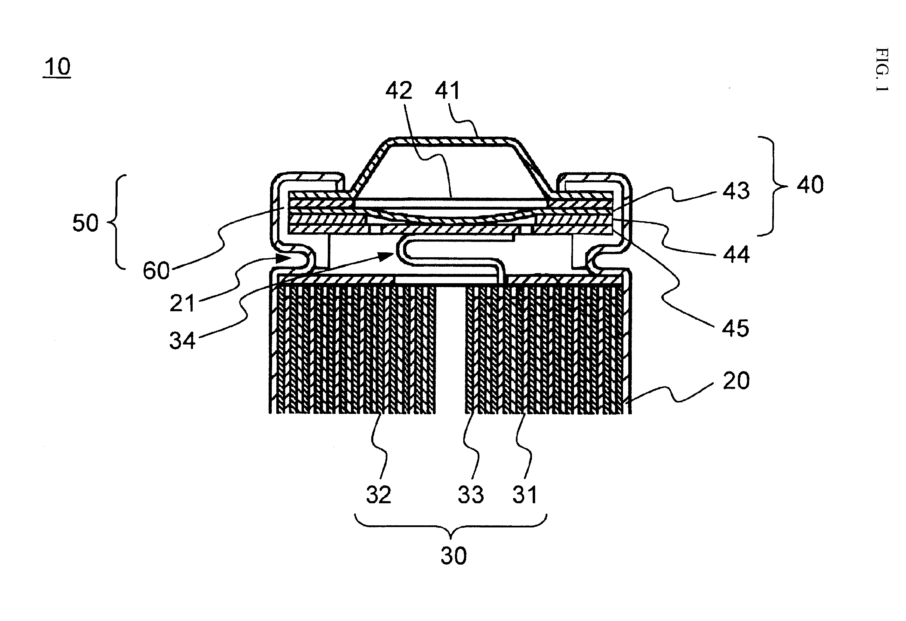

FIG. 1 is a vertical sectional view illustrating a conventional cylindrical secondary battery.

As shown in FIG. 1, a cylindrical secondary battery 10 generally includes a cylindrical can 20, a jelly-roll shaped electrode assembly 30 provided in the can 20, a can assembly 40 coupled to the top of the can 20, a beading member 21 to mount the can assembly 40, and a clamping member 50 to seal the battery.

The electrode assembly 30 is rolled the form of a jelly-roll in a state that a separator 33 is interposed between a cathode 31 and an anode 32, a cathode tap 34 is adhered to the cathode 31 and connected to the can assembly 40, and an anode tap (not shown) is adhered to the anode 32 and connected to the bottom of the can 20.

The can assembly 40 has a structure in which a top cap 41 to form a cathode terminal, a positive temperature coefficient (PTC) element 42 that considerably increases battery resistance and thus blocks electric current when an internal battery temperature increases, a safety vent 43 that blocks electric current and/or gas discharge when an internal pressure of the battery increases, an insulating member 44 that electrically isolates the region of the safety vent 43 excluding a specific region from the cap plate 45 and a cap plate 45 connected to the cathode tap 34 connected to the cathode 31 are laminated in this order. Such a can assembly 40 is mounted on the beading member 21 formed inside by beading the top of the can 20 in a state that the can assembly 40 is mounted on the gasket 60.

The top cap of the cylindrical secondary battery generally uses a material obtained by pressing a cold-rolled steel plate (SPCC), plating the stainless steel with Ni to prevent corrosion and subjecting the stainless steel to additional anti-corrosive post-treatment to prevent corrosion by fine pin-holes.

However, when the cold-rolled steel plate is used, additional Ni plating processes and anti-corrosive post-treatment processes are further required, thus disadvantageously causing deterioration in the overall process efficiency. In spite of the Ni plating and anti-corrosive post-treatment, corrosion occurs under harsh conditions such as foreign materials on the surface or high-temperature and high humidity.

In addition, due to a double structure in which the surface of stainless steel is plated with Ni, corrosion of the stainless steel is accelerated when the Ni layer is broken by exterior scratches. When products are scratched, the products are considered to be defective and problems associated with quality and cost management thus occur.

Accordingly, there is an increasing need for development of a top cap for cylindrical secondary batteries that exhibits superior corrosion resistance and reduces a defect ratio by exterior scratches.

### [DISCLOSURE]

### [TECHNICAL PROBLEM]

Therefore, the present invention has been made to solve the above and other technical problems that have yet to be resolved.

As a result of repeated and intense research and various experiments, the present inventors discovered that a top cap composed of a corrosion-resistant single substance and having a surface with irregularities exhibits superior corrosion resistance and reduces occurrence of exterior scratches. The present invention has been completed based on this discovery.

### [TECHNICAL SOLUTION]

In accordance with one aspect of the present invention, provided is a top cap for cylindrical secondary batteries composed of a corrosion-resistant single substance and having a surface with irregularities, to impart a surface roughness capable of preventing formation of surface scratches.

When a corrosion-resistant substance is used as a material for the tap cap, although scratches are formed on the surface, anti-corrosion performance can be maintained. Furthermore, by forming irregularities with a specific structure on the surface, resistance to exterior scratches and the like is improved and occurrence of defects by scratches can be considerably decreased. In addition, advantageously, additional Ni plating and anti-corrosive post-treatment processes are unnecessary and the overall process can thus be more efficiently controlled.

Any material for the top cap for cylindrical secondary batteries may be used without particular limitation so long as it is a single substance with corrosion resistance and the material is preferably stainless steel.

Stainless steel is more expensive than a conventional cold-rolled steel plate (steel plate cold commercial: SPCC). However, when considering the cost required for Ni plating and anti-corrosive post-treatment of a cold-rolled steel plate, the price of stainless steel is substantially equivalent to the cost of cold-rolled steel plate and there is only a slight difference depending on the price of raw materials.

The stainless steel is broadly divided into iron-chromium ferrite stainless steel and iron-nickel-chromium austenite stainless steel. In addition, stainless steel is classified into several types depending on the alloy ratio of the materials. Examples of the standard indicating the type of stainless steel include steel use stainless (SUS), which is a Japanese industrial standard, and STS which is a Korean industrial standard, and the like. The type of stainless steel is represented by a number appended to SUS or STS. Hereinafter, SUS commonly used in the art will be used.

Any alloy of stainless steel may be used without particular limitation so long as it satisfies requirements and non-limiting examples thereof include SUS 430.

As defined above, the surface roughness of the top cap is a roughness, enabling prevention of exterior scratches.

Surface roughness means a degree of fine irregularities formed when a metal surface is subjected to finishing. Examples of the units of measure of surface roughness include arithmetical average roughness (Rₐ), maximum height (Rₘₐₓ), 10-point average roughness (R_{z}) and the like.

The arithmetical average roughness (Rₐ) uses a standard deviation of all peaks and valleys that are deviated from an average line throughout all standard lengths in a roughness curve as a surface roughness. The arithmetical average roughness (Rₐ) is a surface roughness representation method that is the most commonly used for general materials.

The maximum height (Rₘₐₓ) uses a vertical distance from the highest peak to the deepest valley as a surface roughness.

The 10-point average roughness (R_{z}) uses a distance between an average height of the highest 5 peaks and an average height of the deepest 5 valleys in the cross-sectional curve as a surface roughness.

The top cap according to the present invention preferably has a surface roughness (Rₐ) of 0.7 to 1.0, more preferably 0.8 to 0.9.

A method for forming surface roughness of the top cap is not limited and formation of surface roughness of the top cap is preferably carried out by rolling the surface of the top cap with a roll having a rough surface.

Specifically, an SUS material is rolled in a reversing mill including a multi-column rolling roll and the reversing mill includes a work roll that directly contacts the SUS material and a plurality of back up rolls. An SUS material, the surface of which is provided with irregularities, is prepared by electric-discharge machining the work roll roughly.

The surface of the material rolled using the electric-discharged roll is referred to as a "dull finish" in an international standard. In this case, the surface roughness of the SUS material can be controlled depending on the processing degree of a rolling roll.

The present invention also provides a cylindrical secondary battery comprising the top cap.

As mentioned above, the cylindrical secondary battery has a basic structure including a cylindrical can, a jelly-roll shaped electrode assembly provided in the can, a can assembly coupled to an opening top of the can, a beading member to mount the can assembly, and a clamping member to seal the battery and contains a non-aqueous electrolytic solution containing a lithium salt.

The electrode assembly including a cathode, an anode and a separator interposed therebetween is rolled in the form of a jelly-roll, a cathode tap is adhered to the cathode and connected to the can assembly, and an anode tap is adhered to the anode and connected to the bottom of the can.

The can assembly has a structure in which a top cap to form a cathode terminal, a positive temperature coefficient (PTC) element that considerably increases battery resistance and thus blocks electric current when internal battery temperature increases, a safety vent that blocks electric current and/or discharge of gas when an internal pressure of the battery increases, an insulating member that electrically isolates the region of the safety vent excluding a specific region from the cap plate and the cap plate connected to the cathode tap connected to the cathode 31 are laminated in this order. Such a can assembly is mounted on the beading member formed inside by beading the top of the can in a state that the can assembly is mounted on the gasket.

For example, the cathode is produced by applying a slurry prepared by mixing a cathode mixture containing a cathode active material with a solvent such as NMP to a cathode current collector, followed by drying and rolling. The cathode mixture may further optionally contain a component such as a conductive material, a binder or a filler.

The cathode active material is, as a substance that causes electrochemical reactions, a lithium transition metal oxide comprising two or more transition metals and examples thereof include, but are not limited to, layered compounds such as lithium cobalt oxide (LiCoO₂) or lithium nickel oxide (LiNiO₂) substituted with one or more transition metals; lithium manganese oxide substituted with one or more transition metals; lithium nickel oxide represented by the formula of LiNi_{1-y}M_{y}O₂ (in which M = Co, Mn, Al, Cu, Fe, Mg, B, Cr, Zn or Ga, the lithium nickel oxide including one or more elements among the elements, 0.01≤y≤0.7); lithium nickel cobalt manganese composite oxides represented by Li_{1+z}Ni_{b}Mn_{c}Co_{1-(b+c+d)}MdO₍₂₋ₑ₎Aₑ such as Li_{1+z}Ni_{1/3}Co_{1/3}Mn_{1/3}O₂ or Li_{1+z}Ni_{0.4}Mn_{0.4}Co_{0.2}O₂ (in which -0.5≤z≤0.5, 0.1≤b≤0.8, 0.1≤c≤0.8, 0≤d≤0.2, 0≤e≤0.2, b+c+d<1, M = Al, Mg, Cr, Ti, Si or Y, A = F, P or Cl); and olivine lithium metal phosphate represented by the formula of Li₁₊ₓM_{1-y}M'_{y}PO_{4-z}X_{z} (in which M = transition metal, preferably Fe, Mn, Co or Ni, M' = Al, Mg or Ti , X = F, S or N, -0.5≤x≤+0.5, 0≤y≤0.5, and 0≤z≤0.1).

The conductive material is commonly added in an amount of 1 to 30% by weight, based on the total weight of the mixture comprising the cathode active material. Any conductive material may be used without particular limitation so long as it has suitable conductivity without causing adverse chemical changes in the battery. Examples of conductive materials include conductive materials, including graphite; carbon blacks such as carbon black, acetylene black, Ketjen black, channel black, furnace black, lamp black and thermal black; conductive fibers such as carbon fibers and metallic fibers; metallic powders such as carbon fluoride powders, aluminum powders and nickel powders; conductive whiskers such as zinc oxide and potassium titanate; conductive metal oxides such as titanium oxide; and polyphenylene derivatives. Specific examples of commercially available conductive materials may include various acetylene black products (available from Chevron Chemical Company, DENKA BLACK (available from Denka Singapore Private Limited, products available from Gulf Oil Company, Ketjen Black, EC series (available from Armak Company), Vulcan XC-72 (available from Cabot Company) and Super P (Timcal Co.).

The binder is a component which enhances binding of an electrode active material to a conductive material and current collector. The binder is commonly added in an amount of 1 to 30% by weight, based on the total weight of the mixture comprising the cathode active material. Examples of the binder include polyvinylidene, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene propylene diene terpolymer (EPDM), sulfonated EPDM, styrene butadiene rubbers, fluororubbers and various copolymers.

The filler is a component optionally used to inhibit expansion of the electrode. Any filler may be used without particular limitation so long as it does not cause adverse chemical changes in the manufactured battery and is a fibrous material. Examples of the filler include olefin polymers such as polyethylene and polypropylene; and fibrous materials such as glass fibers and carbon fibers.

The cathode current collector is generally manufactured to have a thickness of 3 to 500 *µ*m. Any cathode current collector may be used without particular limitation so long as it has suitable conductivity without causing adverse chemical changes in the manufactured battery. Examples of the cathode current collector include stainless steel, aluminum, nickel, titanium, sintered carbon, and aluminum or stainless steel surface-treated with carbon, nickel, titanium or silver. These current collectors include fine irregularities on the surface thereof so as to enhance adhesion to electrode active materials. In addition, the current collectors may be used in various forms including films, sheets, foils, nets, porous structures, foams and non-woven fabrics.

For example, the anode is produced by applying a slurry prepared by mixing an anode mixture containing an anode active material with a solvent such as NMP to an anode current collector, followed by drying and rolling. The anode mixture may further optionally contain a component such as a conductive material, a binder or a filler.

Examples of the anode active material include carbon and graphite materials such as natural graphite, artificial graphite, expanded graphite, carbon fiber, hard carbon, carbon black, carbon nanotubes, perylene, activated carbon; metals alloyable with lithium, such as Al, Si, Sn, Ag, Bi, Mg, Zn, In, Ge, Pb, Pd, Pt and Ti and compounds containing these elements; composites of carbon and graphite materials with a metal and a compound thereof; and lithium-containing nitrides. Of these, a carbon-based active material, a silicon-based active material, a tin-based active material, or a silicon-carbon-based active material is more preferred. The material may be used alone or in combination of two or more thereof.

The anode current collector is generally fabricated to have a thickness of 3 to 500 *µ*m. Any anode current collector may be used without particular limitation so long as it has suitable conductivity without causing adverse chemical changes in the manufactured battery. Examples of the anode current collector include copper, stainless steel, aluminum, nickel, titanium, sintered carbon, and copper or stainless steel surface-treated with carbon, nickel, titanium or silver, and aluminum-cadmium alloys. Similar to the cathode current collectors, the current collectors include fine irregularities on the surface thereof so as to enhance adhesion to electrode active materials. In addition, the current collectors may be used in various forms including films, sheets, foils, nets, porous structures, foams and non-woven fabrics.

The separator is interposed between the cathode and the anode. As the separator, an insulating thin film having high ion permeability and mechanical strength is used. The separator typically has a pore diameter of 0.01 to 10 *µ*m and a thickness of 5 to 300 *µ*m. As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as both the separator and electrolyte.

The lithium salt-containing, non-aqueous electrolyte is composed of a non-aqueous electrolyte and a lithium salt and examples of preferred electrolytes include non-aqueous organic solvents, organic solid electrolytes, inorganic solid electrolytes and the like.

Examples of the non-aqueous solvent include non-protic organic solvents such as N-methyl-2-pyrollidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

The lithium salt is a material that is readily soluble in the above-mentioned non-aqueous electrolyte and examples thereof include LiCl, LiBr, LiI, LiClO₄, LiBF₄, LiB₁₀C1₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imides.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may additionally contain carbon dioxide gas, fluoro-ethylene carbonate (FEC), propene sultone (PRS) or fluoro-ethylene carbonate (FEC).

The secondary battery may be used for a battery cell used as a power source of small-sized devices as well as a unit battery of a battery module including a plurality of battery cells.

The present invention also provides a battery pack including the plurality of battery modules. The battery pack may be used as a power source of large-to-medium devices requiring high-temperature stability, long cycle characteristics and high rate characteristics and the like.

Examples of preferred middle and large-sized devices include, but are not limited to, electric vehicles including electric vehicles (EVs), hybrid electric vehicles (HEVs), plug-in hybrid electric vehicles (PHEVs); electric two-wheeled vehicles including electric bikes (E-bikes) and electric scooters (E-scooters); electric golf carts; and systems for power storage.

### [BRIEF DESCRIPTION OF THE DRAWINGS]

The above and other objects, features and other advantages of the present invention will be more clearly understood from the following detailed description taken in conjunction with the accompanying drawings, in which:
FIG 1 is a sectional schematic view schematically illustrating a representative structure of an upper part of a cylindrical battery.

### [BEST MODE]

Now, the present invention will be described in more detail with reference to the following examples. These examples are provided only to illustrate the present invention and should not be construed as limiting the scope and spirit of the present invention.

### <Example 1>

An SUS 430 material was rolled in a reversing mill, subjected to surface irregularity treatment such that the surface roughness (Rₐ) reached 0.8, and molded to manufacture a top cap for cylindrical secondary batteries.

### <Comparative Example 1>

An SPCC material was plated with Ni, subjected to anti-corrosive post-treatment and molded to manufacture a top cap for cylindrical secondary batteries.

### <Test Example 1>

Unit resistances of top caps manufactured in Example 1 and Comparative Example 1 and cell resistances of secondary batteries manufactured using top caps of Example 1 and Comparative Example 1 were measured and shown in Table 1.

**<Table 1>**

| | Unit resistance (mΩ) | Cell resistance (mΩ) |
|---|---|---|
| Ex. 1 | 0.4 | 61 |
| Comp. Ex. 1 | 0.1 | 61.5 |

As can be seen from Table 1, the unit resistance of the top cap of Example 1 was about 0.3 mΩ higher than that of Comparative Example 1, while the cell resistance of Example 1 was substantially equivalent to, and more specifically, about 0.5 mΩ lower than, that of Comparative Example 1. Accordingly, it can be seen that the present invention exhibited an increase in resistance and did not cause deterioration in battery performance, as compared to a conventional SPCC steel plate.

### <Test Example 2>

5 top caps respectively manufactured in Example 1 and Comparative Example 1 were immersed in 3% saline, and occurrence of corrosion was monitored for one hour every 20 minutes. The results are shown in the following Table 2.

**<Table 2>**

| | Initial | 20 min | 40 min | 60 min |
|---|---|---|---|---|
| Ex. 1 | 0/5 | 0/5 | 0/5 | 0/5 |
| Comp. Ex. 1 | 0/5 | 3/5 | 3/5 | 4/5 |

As can be seen from Table 2, the top cap manufactured in Example 1 exhibited superior corrosion resistance to Comparative Example 1. This is due to the fact that a corrosion-resistant single substance exhibited considerably superior corrosion resistance than a double structure in which the surface of a material having no corrosion resistance is subjected to anti-corrosion treatment.

### <Test Example 3>

60 top caps respectively manufactured in Example 1 and Comparative Example 1 were immersed in an electrolytic solution, 20 of the top caps were stored at room temperature, at 40 °C and 80%RH, and at 65 °C and 90% RH and corrosion of top caps was measured after 1 hour, 6 hours, one day and 12 days. The results are shown in Table 3 below.

**<Table 3>**

| | Room temperature | | 40°C, 80% RH | | 65°C, 90% RH | |
|---|---|---|---|---|---|---|
| | Ex. 1 | Comp. Ex. 1 | Ex. 1 | Comp. Ex. 1 | Ex. 1 | Comp. Ex. 1 |
| After 1 hour | 0/20 | 0/20 | 0/20 | 0/20 | 0/20 | 6/20 |
| After 6 hours | 0/20 | 0/20 | 0/20 | 1/20 | 1/20 | 20/20 |
| After 1 day | 0/20 | 2/20 | 0/20 | 5/20 | 1/20 | 20/20 |
| After 12 days | 1/20 | 15/20 | 1/20 | 10/20 | 1/20 | 20/20 |

As can be seen from Table 3, the top cap manufactured in Example 1 exhibited superior corrosion resistance to the top cap manufactured in Comparative Example 1.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### [INDUSTRIAL APPLICABILITY]

As apparent from the afore-going, the present invention provides a top cap for cylindrical secondary batteries that is composed of a corrosion-resistant single substance and has a surface with irregularities with a specific structure and is thus highly resistant to scratches and corrosion, and a secondary battery comprising the same.

## Claims

1. A top cap for cylindrical secondary batteries composed of a corrosion-resistant single substance and having a surface with irregularities to impart surface roughness capable of preventing formation of surface scratches.

2. The top cap according to claim 1, wherein the corrosion-resistant single substance is stainless steel.

3. The top cap according to claim 2, wherein the stainless steel is SUS 430.

4. The top cap according to claim 1, wherein the surface roughness (Rₐ) is 0.7 to 1.0.

5. The top cap according to claim 4, wherein the surface roughness (Rₐ) is 0.8 to 0.9.

6. The top cap according to claim 1, wherein the surface roughness is formed by rolling the surface of the top cap with a roll having a roughly processed surface.

7. A cylindrical secondary battery comprising the top cap according to any one of claims 1 to 6.

8. A battery module comprising the secondary battery according to claim 7 as a unit battery.

9. A battery pack comprising the battery module according to claim 8.

10. The battery pack according to claim 9, wherein the battery pack is used as a power source of a medium and large-sized device.

11. The battery pack according to claim 10, wherein the medium and large-sized device is an electric vehicle (EV), a hybrid electric vehicle (HEV), a plug-in hybrid electric vehicle (PHEV) or a system for power storage.
